# EUROPEAN PATENT APPLICATION

(11) **EP 4 746 225 A1**
(43) Date of publication of application: **20.05.2026**
(21) Application number: 24213267.8
(22) Date of filing: 15.11.2024
(51) Int. Cl.: H02J 1/10, H02M 3/158

(54) **AUTOMOTIVE POWER SUPPLY SYSTEM**

(71) Applicant: ZKW Group GmbH, 3250 Wieselburg (AT)
(72) Inventor: Reischer, Manuel, 3170 Hainfeld (AT)
(74) Representative: Patentanwaltskanzlei Matschnig & Forsthuber OG

(57) **Abstract**

The invention relates to an automotive power supply system (1) for transforming battery voltages ranging between 6 V and 16 V DC into DC voltages ranging between 3 V and 12 V, in particular between 3,3 V and 12 V, said automotive power supply system (1) comprising
- an input (2) for receiving voltage of a battery (3), said voltage of the battery (3) being referred to as first voltage (U1),
- a first buck converter (4) for receiving the first voltage (U1) via the input (2) and, if said first voltage (U1) is at least 12 V, for converting it down to a second voltage (U2),
- a boost converter (7) that is connected with the input (2) and configured to convert the first voltage (U1) into a third voltage (U3) that is higher than the first voltage (U1, and
- a multi-phase-dc-dc converter (5) having at least two channels (5a, 5b), said multi-phase-dc-dc converter (5) being configured to activate and deactivate its channels independently of another.

## Description

The invention relates to an automotive power supply system for transforming battery voltages ranging between 6 V and 16 V DC into DC voltages ranging between 3 V and 12 V, in particular between 3,3 V and 12 V, said automotive power supply system comprising an input for receiving voltage of a battery, said voltage of the battery being referred to as first voltage, a first buck converter for receiving the first voltage via the input and, if said first voltage is at least 12 V, for converting it down to a second voltage that ranges between 3 V and 12 V, in particular between 3,3 V and 12 V, and for providing the second voltage to a first output.

In the automotive industry the use of sensors like radar, lidar, cameras or alike is becoming more and more relevant. The main use-case for such sensors is in connection with advanced driver-assistance systems (ADAS). Advanced driver-assistance systems are crucial to enable autonomous driving. Since these sensors can serve such a sensible use-case, their functionality must be fail-safe and/ or redundant. Consequently, also the power supply of these sensors has to meet the requirement for fail-safe functionality and/or redundancy to meet for instance the requirements of the Automotive Safety Integrity Level (ASIL), for instance ASIL-B/D.

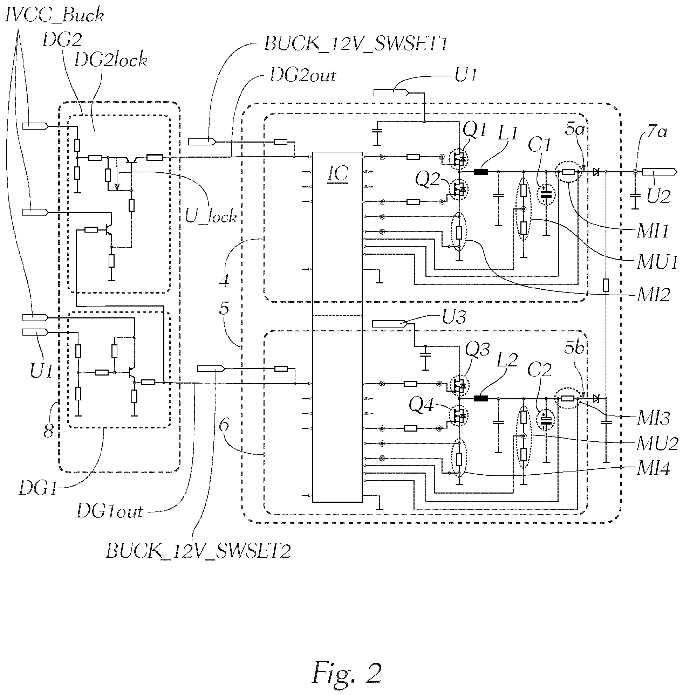

It is an object of the present invention to provide an automotive power supply system having a high level of reliability. This object is achieved by an automotive power supply system of the above-mentioned kind, comprising a boost converter that is connected with the input and configured to convert the first voltage into a third voltage that is higher than the first voltage, said boost converter providing the third voltage to a second output, wherein said third voltage is fed to a second buck converter, said second buck converter being configured to convert the third voltage into the second voltage and to provide the second voltage to the first output, and a multi-phase-dc-dc converter having at least two channels, said multi-phase-dc-dc converter being configured to activate and deactivate its channels independently of another, wherein the multi-phase-dc-dc converter comprises the first buck converter as one of the at least two channels, and the second buck converter as another one of the at least two channels. The automotive power supply system further comprises a switching circuit for receiving and monitoring the first voltage, said switching circuit being connected with the multi-phase-dc-dc converter to switch the activation of the channel having the first buck converter and the channel having the second buck converter, wherein the switching circuit is configured to execute the activation and deactivation of at least some its channels in dependence of the voltage level of the first voltage as follows: If the first voltage is equal to or surpasses a switching threshold Uth, said switching threshold Uth being a predetermined value within the range of 6 V and 12V, the channel having the second buck converter is deactivated and the channel having the first buck converter is activated to convert the first voltage into the second voltage and provide the second voltage to the first output, and if the voltage level is below the switching threshold Uth, the channel having the first buck converter is deactivated and the channel having the second buck converter is activated to convert the third voltage into the second voltage and provide the second voltage to the first output. For instance, the value of the switching threshold Uth can be determined based on the design of the electrical circuit (for instance voltage dividers as disclosed in Fig. 2) that feed the first voltage into switching device which can be implemented for instance as a transistor circuit as disclosed in Fig. 2.

The voltage of the battery does not need to reach 16 V. Any voltage within the range of 6 V to 16 V would be suitable for the present automotive power supply system. The multiphase converter does not have to have more than two channels. It can be a dual phase, a triple phase, a quad phase, etc, - converter. The boost converter can supply a voltage above 12 V, for instance to compensate for a voltage loss according to a diode forward voltage of a diode that is in series with the output of the boost converter.

In the automotive industry DCDC-converters having multiple channels/phases in one package were not common in the past. The invention takes advantage of these new converters which enable controlling of each channel/phase independently. This allows to implement redundancy. It is possible that only one channel of the dual converter is active at any one time. For instance, normally phase 1 is active. This can be supplied by a battery, for instance the KL30eFuse voltage. As this voltage can drop below the switching threshold Uth in the event of a battery fault, which would render the buck of the first channel unusable, the second channel can be supplied by the 48V output of the dual boost converter. This feature provides additional failure protection. One example of a multi-phase-dc-dc converter is for instance integrated in the Infineon Chip with the name "TLD55012QVXUMA1" comprising a dual sync buck controller with SPI interface.

Preferably, the first and the second buck converter are configured to provide a second voltage that equals 5 V, 6 V or 12 V or ranges between 6 V and 12 V.

Advantageously, the channels of the multi-phase-dc-dc converter can be digitally adjusted to determine a conversion into the second voltage and the level of the second voltage.

Preferably, the channels of the multi-phase-dc-dc converter can be adjusted in an analog manner to determine a conversion into the second voltage and the level of the second voltage.

For instance, the ratio of the resistors MU1 and MU2 and the corresponding control logic stored in the IC according to Fig. 2 can be set to determine the conversion. It is also possible to combine analog and digital adjustments.

Advantageously, the third voltage level ranges between 45 V and 50 V, in particular equals 48 V.

Preferably, the multiphase-dc-dc-converter comprises a microcontroller that is connected with the switching circuit to control the activation/ deactivation of the at least two channels based on signals provided by the switching circuit.

Advantageously, the switching circuit is implemented as an analog circuit comprising a first transistor circuit and a second transistor circuit, each having an output that is provided to the microcontroller to determine the switching operation of the respective channels, wherein the transistor circuits are logically coupled by providing the first voltage to the first transistor circuit and by feeding the output of the first transistor circuit as an input to the second transistor circuit ensuring that the output of the analog circuit will trigger the activation of only one of the two channels.

Preferably, the second transistor circuit comprises a locking mechanism that is designed to maintain the level of the output signal of the second transistor circuit in the event of a switch from the first channel to the second channel thus causing a permanent activation of the second channel and a permanent deactivation of the first channel independently of the first voltage level until the switching circuit is reset, for instance by way of cutting its power supply.

Moreover, the invention also relates to an automotive electronic system comprising an automotive power supply system according to the invention and a first load being connected to the second voltage, the first load comprising at least one of the following: a lidar sensor system; a radar sensor system; a camera sensor system for lidar; radar or camera; a seismic motion sensor; an inertial measurement unit; an ultrasonic sensor; a rain sensor; a light sensor; a temperature sensor.

Optionally, the automotive electronic system also comprises a second load being connected to the third voltage, the second load comprising at least one of the following: an electric steering, an air condition, a heated windscreen, an active chassis, an engine cooling, a PTC heater, an electric turbo charger.

In the following, in order to further demonstrate the present invention, illustrative and non-restrictive embodiments are discussed, as shown in the drawings, which show:
Fig. 1 an exemplary schematic of an automotive power supply system according to the invention,
Fig. 2 an exemplary implementation of the automotive power supply according to Fig. 1 including details regarding its electrical circuits.

In the following figures identical reference signs refer to identical features unless expressly depicted otherwise. The reference signs are only for informational purpose and do not delimit the scope of protection.

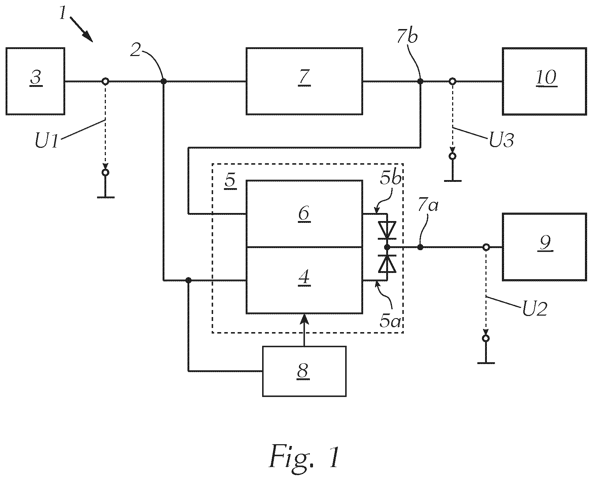

Fig. 1 shows an automotive power supply system 1 for transforming battery voltages ranging between 6 V and 16 V DC into DC voltages ranging between 3 V and 12 V, in particular between 3,3 V and 12 V. The automotive power supply system 1 comprises an input 2 for receiving voltage of a battery 3, said voltage of the battery 3 being referred to as first voltage U1, and a first buck converter 4 for receiving the first voltage U1 via the input 2. If the first voltage U1 is equal or above the switching threshold Uth, the first buck converter 4 converts the first voltage U1 down to a second voltage U2 that ranges between 3 V and 12 V, in particular between 3,3 V and a maximum voltage of 12 V. This converted voltage is referred to as second voltage U2 and provided to a second output 7a. In case that diodes are arranged between the first output 7a and the buck converter 4, the output voltage of the buck converter 4 can be higher than 12 V if the first voltage U1 is also higher than 12 V to compensate for the forward voltage drop of the diode and facilitate 12 V at the second output 7a. Same considerations can also apply to a second buck converter 6 that will be discussed in the following.

The automotive power supply system 1 further comprises a boost converter 7 that is connected with the input 2 and configured to convert the first voltage U1 into a third voltage U3. The third voltage U3 is higher than the first voltage U1. The boost converter 7 is configured to provide the third voltage U3 to a second output 7b. Moreover, the third voltage U3 is fed to the second buck converter 6 as an input, said second buck converter 6 being configured to convert the third voltage U3 into the second voltage U2 and to provide the second voltage U2 to the first output 7a.

To avoid simultaneous activation of both buck converters 4 and 6, the automotive power supply system 1 further comprises a multi-phase-dc-dc converter 5 having at least two channels 5a, 5b, said multi-phase-dc-dc converter 5 being configured to activate and deactivate its channels independently of another, wherein the multi-phase-dc-dc converter 5 comprises the first buck converter 4 as one of the at least two channels 5a, 5b, and the second buck converter 6 as another one of the at least two channels 5a, 5b, wherein the automotive power supply system 1 further comprises a switching circuit 8 for receiving and monitoring the first voltage U1, said switching circuit 8 being connected with the multi-phase-dc-dc converter 5 to switch the activation of the channel 5a having the first buck converter 4 and the channel 5b having the second buck converter 6, wherein the switching circuit 8 is configured to execute the activation and deactivation of at least some its channels 5a, 5b in dependence of the voltage level of the first voltage U1 as follows: If the first voltage U1 is equal to or surpasses a switching threshold Uth, said switching threshold Uth being a predetermined value within the range of 6 V and 12V, the channel 5b having the second buck converter 6 is deactivated and the channel 5a having the first buck converter 4 is activated to convert the first voltage U1 into the second voltage U2 and provide the second voltage U2 to the first output 7a, and if the voltage level is below the switching threshold Uth, the channel 5a having the first buck converter 4 is deactivated and the channel 5b having the second buck converter 6 is activated to convert the third voltage U3 into the second voltage U2 and provide the second voltage U2 to the first output 7a.

The first and the second buck converter 4, 6 can be configured to provide a second voltage U2 that equals 5 V, 6 V or 12 V or ranges between 6 V and 12 V. The channels 5a, 5b of the multi-phase-dc-dc converter 5 can be digitally adjusted to determine a conversion into the second voltage U2 and the level of the second voltage U2. By alternative or in addition, it is possible that the channels 5a, 5b of the multi-phase-dc-dc converter 5 can be adjusted in an analog manner to determine a conversion into the second voltage U2 and the level of the second voltage U2. For instance, the ratio of the resistors MU1 and MU2 and the corresponding control logic stored in the IC according to Fig. 2 can be set to determine the conversion. It is also possible to combine analog and digital adjustments.

The third voltage level U3 can range between 45 V and 50 V, in particular equals 48 V.

Furthermore, the invention also relates to an automotive electronic system comprising an automotive power supply system according to any of the preceding claims and a first load 9 being connected to the second voltage U2, the first load 9 comprising at least one of the following: a lidar sensor system; a radar sensor system; a camera sensor system for lidar; radar or camera; a seismic motion sensor; an inertial measurement unit; an ultrasonic sensor; a rain sensor; a light sensor; a temperature sensor.

The automotive electronic system also comprises a second load 10 (see Fig. 1) being connected to the third voltage U3, the second load 10 comprising at least one of the following: an electric steering, an air condition, a heated windscreen, an active chassis, an engine cooling, a PTC heater, an electric turbo charger.

Fig. 2 shows an exemplary implementation of the automotive power supply according to Fig. 1 including details regarding its electrical circuits. The multiphase-dc-dc-converter 5 comprises a microcontroller IC that is connected with the switching circuit 8 to control the activation/ deactivation of the at least two channels 5a, 5b based on signals provided by the switching circuit 8. As can be seen from Fig. 2, the switching circuit 8 is implemented as an analog circuit comprising a first transistor circuit DG1 and a second transistor circuit DG2, each having an output DG1out, DG2out that is provided to the microcontroller IC to determine the switching operation of the respective channels 5a, 5b, wherein the transistor circuits DG1, DG2 are logically coupled by providing the first voltage U1 to the first transistor circuit DG1 and by feeding the output DG1out of the first transistor circuit DG1 as an input to the second transistor circuit DG2 ensuring that the output DG1out, DG2out of the analog circuit will trigger the activation of only one of the two channels 5a,5b.

It is possible that the second transistor circuit DG2 comprises a locking mechanism DG2lock that is designed to maintain the level of the output signal DG2out of the second transistor circuit DG2 in the event of a switch from the first channel 5a to the second channel 5b thus causing a permanent activation of the second channel 5b and a permanent deactivation of the first channel 5a independently of the first voltage level U1 until the switching circuit 8 is reset, for instance by way of cutting its power supply. This circuit ensures that there is no iterative back and forward swinging in the dimming of the phases.

Taking a closer look of the electrical components shown in Fig. 2., exemplary parts of the invention are now described in other words as follows: The switching circuit 8 receives for instance 5V as an operational voltage from the internal LDO of the multi-phase-dc-dc converter 5. The input of the first phase, i.e. the level of the first voltage U1, is permanently monitored by means of a special transistor circuit. If the voltage of the first input falls below a certain value, the second phase is switched on and takes over the power supply for the participants. This makes the system redundant and especially suitable for the requirements of ADAS and functional safety.

The first voltage U1 is tapped and set to 5V via a voltage divider. The current flow is limited via the resistor in the cross branch and connected to the gate of the following transistor of the first transistor circuit DG1. A PNP transistor can be used as an inverter. As long as the first voltage U1 has the value of the switching threshold Uth or higher, the voltage in the divider is near to 5V and the transistor does not conduct. There is therefore a potential of 0V at the output of the inverter (Buck_12V_SET2). This signal at the output of the transistor is connected to the VSET2 pin of the buck and is dimmed to 0% at 0V.

As soon as the first voltage U1 becomes lower than the switching threshold Uth, the voltage divider voltage also becomes lower and the PNP transistor becomes conductive. As soon as a threshold of 1.5V is reached at the VSET2 pin, the second channel of the dual buck is dimmed to 100%. This circuit provides additional reliability. The voltage drop of the first voltage U1 doesn't negatively affect the voltage level of second channel 5b, since it is connected to a stable higher voltage, namely the output of the boost converter 7.

The reference signs MI1 to MI4 refer to resistors for measuring the respective currents. Reference signs MU1 and MU2 refer to voltage dividers comprising two resistors for measuring respective voltages. The controller IC controls channels 5a and 5b by controlling the transistor circuits Q1 to Q4 in a manner that ensures that the second voltage U2 can be provided to the output 7a. The coils L1 and L2 together with the capacitors C1 and C2 smoothen the output of the channels 5a and 5b.

Furthermore, both outputs of the buck-converters 4 and 6 can be configured in a way that only the higher voltage is passed to the output. That is done with the two Schottky diodes on the right of the schematic. In addition, capacitors are implemented to store voltage, while the system is swapping the phases.

If there is a possibility for digital dimming, the capacitors may be skipped or much smaller (because digital dimming is way faster when going from low to high state). The buck-converters can activate within 0.8 ms, so the capacity needs to be only big enough to store the energy during the time until the activation of the buck-converter took place.

Additionally, it is possible to lock in a deactivation of the first channel 5a to avoid toggling between the channels. For this purpose, the circuit DG2lock is implemented as follows:
The main transistor (upper transistor of Fig. 2 of DG2 receiving U_lock) can be of the type pnp. It is configured that it always conducts. Therefore phase 1 will be on. As soon as the voltage of the battery drops and the phase 2 is activated the voltage U_lock will rise and get positive and the pnp transistor will deactivate leading to a drop of the output buck_12V_set1 to 0 which corresponds to 0% dimming on the phase 1.

This circuit ensures that there is no "back and forward" in the dimming of the phases.

The invention is not limited to the embodiments shown but is defined by the entire scope of protection of the claims. Individual aspects of the invention or of the embodiments can also be taken up and combined with one another. Any reference signs in the claims are exemplary and serve only the purpose of allowing easier review without restricting the claims.

## Claims

1. Automotive power supply system (1) for transforming battery voltages ranging between 6 V and 16 V DC into DC voltages ranging between 3 V and 12 V, in particular between 3,3 V and 12 V, said automotive power supply system (1) comprising
- an input (2) for receiving voltage of a battery (3), said voltage of the battery (3) being referred to as first voltage (U1),
- a first buck converter (4) for receiving the first voltage (U1) via the input (2) and, if said first voltage (U1) is at least 12 V, for converting it down to a second voltage (U2) that ranges between 3 V and 12 V, in particular between 3,3 V and 12 V, and for providing the second voltage (U2) to a first output (7a),
**characterized in that** the automotive power supply system (1) further comprises
- a boost converter (7) that is connected with the input (2) and configured to convert the first voltage (U1) into a third voltage (U3) that is higher than the first voltage (U1), said boost converter (7) providing the third voltage (U3) to a second output (7b), wherein said third voltage (U3) is fed to a second buck converter (6), said second buck converter (6) being configured to convert the third voltage (U3) into the second voltage (U2) and to provide the second voltage (U2) to the first output (7a), and
- a multi-phase-dc-dc converter (5) having at least two channels (5a, 5b), said multi-phase-dc-dc converter (5) being configured to activate and deactivate its channels independently of another, wherein the multi-phase-dc-dc converter (5) comprises
* the first buck converter (4) as one of the at least two channels (5a, 5b), and
* the second buck converter (6) as another one of the at least two channels (5a, 5b),
- a switching circuit (8) for receiving and monitoring the first voltage (U1), said switching circuit (8) being connected with the multi-phase-dc-dc converter (5) to switch the activation of the channel (5a) having the first buck converter (4) and the channel (5b) having the second buck converter (6), wherein the switching circuit (8) is configured to execute the activation and deactivation of at least some its channels (5a, 5b) in dependence of the voltage level of the first voltage (U1) as follows:
* if the first voltage (U1) is equal to or surpasses a switching threshold Uth, said switching threshold Uth being a predetermined value within the range of 6 V and 12V, the channel (5b) having the second buck converter (6) is deactivated and the channel (5a) having the first buck converter (4) is activated to convert the first voltage (U1) into the second voltage (U2) and provide the second voltage (U2) to the first output (7a), and
* if the voltage level is below the switching threshold Uth, the channel (5a) having the first buck converter (4) is deactivated and the channel (5b) having the second buck converter (6) is activated to convert the third voltage (U3) into the second voltage (U2) and provide the second voltage (U2) to the first output (7a).

2. Automotive power supply system (1), wherein first and the second buck converter (4, 6) are configured to provide a second voltage (U2) that equals 5 V, 6 V or 12 V or ranges between 6 V and 12 V.

3. Automotive power supply system (1) according to claim 1 or 2, wherein the channels (5a, 5b) of the multi-phase-dc-dc converter (5) can be digitally adjusted to determine a conversion into the second voltage (U2) and the level of the second voltage (U2).

4. Automotive power supply system (1) according to any of the preceding claims, wherein the channels (5a, 5b) of the multi-phase-dc-dc converter (5) can be adjusted in an analog manner to determine a conversion into the second voltage (U2) and the level of the second voltage (U2).

5. Automotive power supply system (1) according to any of the preceding claims, wherein the third voltage level (U3) ranges between 45 V and 50 V, in particular equals 48 V.

6. Automotive power supply system (1) according to any of the preceding claims, wherein the multiphase-dc-dc-converter (5) comprises a microcontroller (IC) that is connected with the switching circuit (8) to control the activation/deactivation of the at least two channels (5a, 5b) based on signals provided by the switching circuit (8).

7. Automotive power supply system (1) according to claim 6, wherein the switching circuit (8) is implemented as an analog circuit comprising a first transistor circuit (DG1) and a second transistor circuit (DG2), each having an output (DG1out, DG2out) that is provided to the microcontroller (IC) to determine the switching operation of the respective channels (5a, 5b), wherein the transistor circuits (DG1, DG2) are logically coupled by providing the first voltage (U1) to the first transistor circuit (DG1) and by feeding the output (DG1out) of the first transistor circuit (DG1) as an input to the second transistor circuit (DG2) ensuring that the output (DG1out, DG2out) of the analog circuit will trigger the activation of only one of the two channels (5a,5b).

8. Automotive power supply system (1) according to claim 7, wherein the second transistor circuit (DG2) comprises a locking mechanism (DG2lock) that is designed to maintain the level of the output signal (DG2out) of the second transistor circuit (DG2) in the event of a switch from the first channel (5a) to the second channel (5b) thus causing a permanent activation of the second channel (5b) and a permanent deactivation of the first channel (5a) independently of the first voltage level (U1) until the switching circuit (8) is reset, for instance by way of cutting its power supply.

9. Automotive electronic system comprising an automotive power supply system according to any of the preceding claims and a first load (9) being connected to the second voltage (U2), the first load (9) comprising at least one of the following: a lidar sensor system; a radar sensor system; a camera sensor system for lidar; radar or camera; a seismic motion sensor; an inertial measurement unit; an ultrasonic sensor; a rain sensor; a light sensor; a temperature sensor.

10. Automotive electronic system according to claim 9, wherein the automotive electronic system also comprises a second load (10) being connected to the third voltage (U3), the second load (10) comprising at least one of the following: an electric steering, an air condition, a heated windscreen, an active chassis, an engine cooling, a PTC heater, an electric turbo charger, usually with 48V power supply.
